# EUROPEAN PATENT SPECIFICATION

(11) **EP 4 718 738 B1**
(45) Date of publication and mention of the grant of the patent: **25.11.2026**
(21) Application number: 24202873.6
(22) Date of filing: 26.09.2024
(51) Int. Cl.: H04W 8/18, H04W 76/10, H04W 84/06

(54) **DEVICE AND METHOD FOR PROVIDING COMMUNICATION BETWEEN TWO MOBILE TERMINALS**
VORRICHTUNG UND VERFAHREN ZUR BEREITSTELLUNG VON KOMMUNIKATION ZWISCHEN ZWEI MOBILEN ENDGERÄTEN
DISPOSITIF ET PROCÉDÉ DE COMMUNICATION ENTRE DEUX TERMINAUX MOBILES

(43) Date of publication of application: 01.04.2026
(73) Proprietor: NTT DOCOMO, INC., Tokyo 100-6150 (JP)
(72) Inventor: BHATTACHARJEE, Sushmit, 80687 Munich (DE); SAMA, Malla Reddy, 80687 Munich (DE); MUTIKAINEN, Jari, 80687 Munich (DE); MINOKUCHI, Atsushi, Tokyo, 100-6150 (JP)
(74) Representative: Viering, Jentschura & Partner mbB Patent- und Rechtsanwälte

(56) References cited:
- WO-A1-2023/185615
- CN-A- 116 827 420
- US-A1- 20250 023 629

## Description

The present disclosure relates to devices and methods for providing communication between two mobile terminals
A mobile communication network may use regenerative-based satellite access. This means that a satellite has an onboard base station and can thus act as a serving base station for a radio cell, which is for example remotely located from other, ground-based, base stations of the mobile communication network. It is also possible that multiple satellites providing base stations in that manner are connected via satellite links, such that a satellite constellation of more than one satellite may operate multiple radio cells of a mobile communication network. A special feature in such a satellite-based communication scenario (i.e. where one or more satellites act as base station(s)) is local (onboard) routing, where traffic between mobile terminals served by one or more satellites is routed with a satellite or a satellite constellation without transiting via a ground segment, i.e. a ground-based part of the mobile communication network. Efficient approaches to provide and use this feature are desirable.

Document WO 2023/185615 A1 discloses a satellite communication method and apparatus, wherein the method includes a session management network element obtaining first service information, wherein the service information indicates one or more services supported by a satellite, and wherein the session management network element determines, based on the first service information, whether a terminal device is allowed to access the services supported by the satellite. When determining that the terminal device is allowed to access at least one of the services supported by the satellite, the session management network element inserts a user plane network element on the satellite into a user plane path of the terminal device.

Document CN 116 827 420 A discloses a satellite data management method, device, equipment and a storage medium, the method comprising that a satellite communication system receives a session establishment request sent by a communication terminal, and the session establishment request comprises communication terminal information; whereby the satellite communication system comprises a plurality of satellites, and Unified Data Management, UDM, network elements are deployed on the satellites. The satellite communication system responds to the session establishment request, obtains session management subscription data and updates subscription through the UDM network element according to the communication terminal information, and generates a subscription data modification response message, the satellite communication system then sends the subscription and signing data modification response message to the communication terminal.

According to one embodiment, a method for providing communication between two mobile terminals is provided, comprising receiving a request to establish, via at least one satellite, a communication session for a mobile terminal, wherein the mobile terminal is served by a serving satellite of the at least one satellite, checking subscription data of the mobile terminal for information about whether the mobile terminal has a type of subscription which includes a right to use a feature which includes a routing in the at least one satellite, avoiding a core network on the ground, of traffic between the mobile terminal and other mobile terminals and whether the mobile terminal has a type of subscription which includes a right to use the feature per satellite of multiple satellites or per satellite constellation of multiple satellite constellations, wherein the subscription data of the mobile terminal comprises an attribute indicating satellite subscription information, and wherein said satellite subscription information comprises a satellite constellation ID and a list of satellite IDs of the satellite constellation ID identifying one or more satellites for which onboard routing is allowed, and, in reaction to that the mobile terminal has a type of subscription which includes the right to use the feature, establishing a communication session for the mobile terminal which supports routing in the at least one satellite, avoiding a core network on the ground, of traffic between the mobile terminal and other mobile terminals.

In the drawings, like reference characters generally refer to the same parts throughout the different views. The drawings are not necessarily to scale, emphasis instead generally being placed upon illustrating the principles of the invention. In the following description, various aspects are described with reference to the following drawings, in which:
- Figure 1: shows a mobile radio communication system according to an embodiment.
- Figure 2: illustrates a scenario where the functionality of one or more base stations is provided by one or more satellites.
- Figure 3: shows a flow diagram illustrating a process for setting up a PDU (Packet Date Unit) session in a scenario as illustrated in figure 2.
- Figure 4: shows a flow diagram illustrating a method for providing communication between two mobile terminals according to an embodiment.

The following detailed description refers to the accompanying drawings that show, by way of illustration, specific details and aspects of this disclosure in which the invention may be practiced. Other aspects may be utilized, and structural, logical, and electrical changes may be made without departing from the scope of the invention. The various aspects of this disclosure are not necessarily mutually exclusive, as some aspects of this disclosure can be combined with one or more other aspects of this disclosure to form new aspects.

Various examples corresponding to aspects of this disclosure are described below:
Example 1 is a method for providing communication between two mobile terminals, comprising:
- receiving a request to establish, via at least one satellite, a communication session for a mobile terminal
- checking subscription data of the mobile terminal for information about whether the mobile terminal has a type of subscription which includes a right to use a feature which includes a routing in the at least one satellite, avoiding a core network on the ground, of traffic between the mobile terminal and other mobile terminals
- in reaction to that the mobile terminal has a type of subscription which includes the right to use the feature, establishing a communication session for the mobile terminal which supports routing in the at least one satellite, avoiding a core network on the ground, of traffic between the mobile terminal and other mobile terminals.

The method may further comprise, in reaction to that the mobile terminal does not have a type of subscription which includes the right to use the feature, establishing a communication session for the mobile terminal which does not support routing in the at least one satellite, avoiding a core network on the ground, of traffic between the mobile terminal and other mobile terminals (but routes traffic over the core network on the ground).

Example 2 is the method of example 1, wherein establishing the communication session includes allocating a (local) user plane function onboard the at least one satellite for the mobile terminal.

Example 3 is the method of example 1 or 2, comprising routing data between the mobile terminal and another mobile terminal while avoiding the core network on the ground in reaction to the mobile terminal having a type of subscription which includes the right to use the feature and a communication session for the other mobile terminal being established which supports routing in the at least one satellite, avoiding a core network on the ground, of traffic between the other mobile terminal and the mobile terminal.

Example 4 is the method of example 3, comprising
- receiving a request to establish a communication session for the other the mobile terminal via the at least one satellite and a request to establish a communication between the mobile terminal and the other mobile terminal
- checking subscription data of the other mobile terminal for information about whether the other mobile terminal has a type of subscription which includes a right to use the feature
- in reaction to that the mobile terminal has a type of subscription which includes the right to use the feature, and the other mobile terminal has a type of subscription which includes the right to use the feature, perform communication between the mobile terminal and the other mobile terminal wherein data between the mobile terminal and the other mobile terminal is routed avoiding the core network on the ground.

The method may further comprise, in reaction to that the mobile terminal or the other mobile terminal or both do not have a type of subscription which includes the right to use the feature, performing communication between the mobile terminal and the other mobile terminal wherein data between the mobile terminal and the other mobile terminal is routed over the core network on the ground.

Example 5 is the method of example 4, wherein the at least one satellite includes a serving satellite of the mobile terminal and a serving satellite of the other mobile terminal (which may be the same satellite) and comprising, in reaction to that the mobile terminal has a type of subscription which includes the right to use the feature, and the other mobile terminal has a type of subscription which includes the right to use the feature,
- allocating a user plane function in the serving satellite of the mobile terminal for the mobile terminal and allocating a user plane function in the serving satellite of the other mobile terminal for the other mobile terminal and
- routing traffic over the user plane function allocated for the mobile terminal and the user plane function allocated for the other mobile terminal between the mobile terminal and the other mobile terminal (wherein the user plane function allocated for the mobile terminal and the user plane function allocated for the other mobile terminal may be the same).

Example 6 is the method of example 5, wherein the serving satellite of the mobile terminal and a serving satellite of the other mobile terminal are different satellites connected via an inter-satellite link and routing traffic between the mobile terminal and the other mobile terminal comprises routing the traffic via the inter-satellite link.

Example 7 is the method of any one of examples 1 to 6, wherein each satellite of the at least one satellite implements at least one base station of a mobile communication network, and the core network is a core network of the mobile communication network.

Example 8 is the method of any one of examples 1 to 7, performed by a session management component (e.g. an SMF according to 5G or the 6G equivalent) of the core network.

Example 9 is the method of any one of examples 1 to 8, wherein checking the subscription data of the mobile terminal comprises accessing a subscription data repository of the core network (e.g. a UDM) for the subscription data.

Example 10 is the method of any one of examples 1 to 9, wherein the mobile terminal is served by a serving satellite of the at least one satellite (i.e. the at least one satellite includes a satellite that acts as (serving) base station for the mobile terminal) and wherein the subscription data indicates whether the mobile terminal has a type of subscription which includes the right to use the feature per satellite of multiple satellites or per satellite constellation of multiple satellite constellations and checking the subscription data comprises checking whether the subscription data indicates for the serving satellite of the mobile terminal that the mobile terminal has a type of subscription which includes the right to use the feature and the communication session is established in reaction to that the mobile terminal has a type of subscription which includes the right to use the feature for the serving satellite.

Example 11 is the method of any one of examples 1 to 10, wherein the request to establish the communication session for the mobile terminal originates from the mobile terminal.

Example 12 is the method of any one of examples 1 to 11, wherein the communication session is a Packet Data Unit session.

Example 13 is a session management control component of a mobile communication network, configured to perform the method of any one of examples 1 to 12.

It should be noted that one or more of the features of any of the examples above may be combined with any one of the other examples. In particular, the examples described in context of the device are analogously valid for the method.

According to further embodiments, a computer program and a computer readable medium comprising instructions, which, when executed by a computer, make the computer perform the method of any one of the above Examples are provided.

In the following, various examples will be described in more detail.

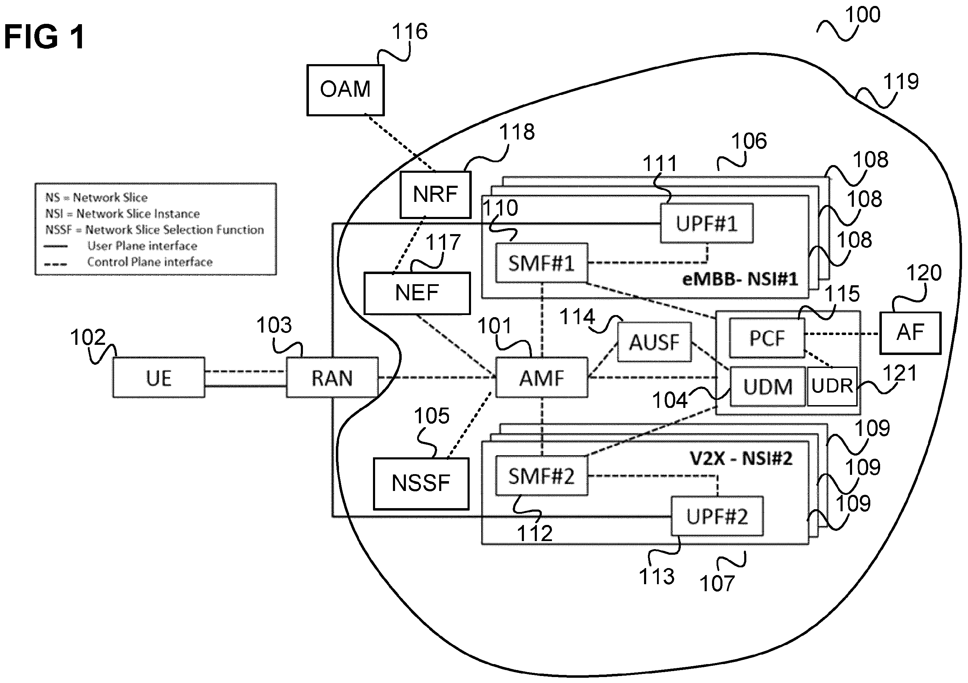

Figure 1 shows a mobile radio communication system 100, for example configured according to 5G (Fifth Generation) as specified by 3GPP (Third Generation Partnership Project).

The mobile radio communication system 100 includes a mobile radio terminal device 102 such as a UE (user equipment), and the like. The mobile radio terminal device 102, also referred to as subscriber terminal, forms the terminal side while the other components of the mobile radio communication system 100 described in the following are part of the mobile communication network side, i.e. part of a mobile communication network (e.g. a Public Land Mobile Network PLMN).

Furthermore, the mobile radio communication system 100 includes a Radio Access Network (RAN) 103, which may include a plurality of radio access network nodes, i.e. base stations configured to provide radio access in accordance with a 5G (Fifth Generation) radio access technology (5G New Radio). It should be noted that the mobile radio communication system 100 may also be configured in accordance with LTE (Long Term Evolution) or another mobile radio communication standard (e.g. non-3GPP accesses like Wi-Fi) but 5G is herein used as an example. Each radio access network node may provide a radio communication with the mobile radio terminal device 102 over an air interface. It should be noted that the radio access network 103 may include any number of radio access network nodes.

The mobile radio communication system 100 further includes a core network (5GC) 119 including an Access and Mobility Management Function (AMF) 101 connected to the RAN 103, a Unified Data Management (UDM) 104 and a Network Slice Selection Function (NSSF) 105. Here and in the following examples, the UDM may further consist of the actual UE's subscription database, which is known as, for example, the UDR (Unified Data Repository) 121. The core network 119 further includes an AUSF (Authentication Server Function) 114, a PCF (Policy Control Function) 115 and an AF (application function) 120.

The core network 119 may have multiple core network slices 106, 107 and for each core network slice 106, 107, the operator (also referred to MNO for Mobile Network Operator) may create multiple core network slice instances 108, 109. For example, the core network 119 includes a first core network slice 106 with three core network slice instances (C-NSIs) 108 for providing Enhanced Mobile Broadband (eMBB) and a second core network slice 107 with three core network slice instances (NSIs) 109 for providing Vehicle-to-Everything (V2X).

The Network Slice Selection Assistance Information (NSSAI) represents a set of parameters used to identify and describe a (core) network slice. It includes two key elements:
- Slice Differentiator (SD): it is a globally unique identifier that distinguishes between different network slices within a 5G network. The SD is used to ensure that the UE selects the correct slice during communication.
- Slice Service Type (SST): it indicates the specific service or application type associated with a network slice. The SST provides high-level information about the characteristics and requirements of a slice, such as low latency, high bandwidth, or ultra-reliable communication.

Typically, when a core network slice is deployed (i.e. created), network functions (NFs) are instantiated, or (if already instantiated) referenced to form a core network slice instance and network functions that belong to a core network slice instance are configured with a core network slice instance identification.

Specifically, in the shown example, each instance 108 of the first core network slice 106 includes a first Session Management Function (SMF) 110 and a first User Plane Function (UPF) 111 and each instance 109 of the second core network slice 107 includes a second Session Management Function (SMF) 112 and a second User Plane Function (UPF) 113. The SMFs 110, 112 are for handling PDU (Protocol Data Unit) sessions, i.e. for creating, updating and removing PDU sessions and managing session context with the User Plane Function (UPF).

The RAN 103 and the core network 119 form the network side of the mobile radio communication system, or, in other words, form the mobile radio communication network. The mobile radio communication network and the mobile terminals accessing the mobile radio communication network form, together, the mobile radio communication system.

Like the core network 119, the RAN 103 may also be sliced, i.e. include multiple RAN slices. A RAN slice and a core network slice 106, 107 may be grouped to form a network slice. In the following, "network slice" (or just "slice") generally refers to a core network slice but may also include a RAN slice or even a transport network slice.

The mobile radio communication system 100 may further include an OAM (Operation, Administration and Maintenance) function (or entity) 116, e.g. implemented by one or more OAM servers which is connected to the RAN 103 and the core network 119 (connections are not shown for simplicity). The OAM 116 may include an MDAS (Management Data Analytics Service). The MDAS may for example provide an analytics report regarding network slice instance load. Various factors may impact the network slice instance load, e.g. number of UEs accessing the network, number of QoS flows, the resource utilizations of different NFs which are related with the network slice instance.

Further, the core network 118 includes an NRF (Network Repository Function). The core network 119 may further include a Network Exposure Function (NEF) 117.

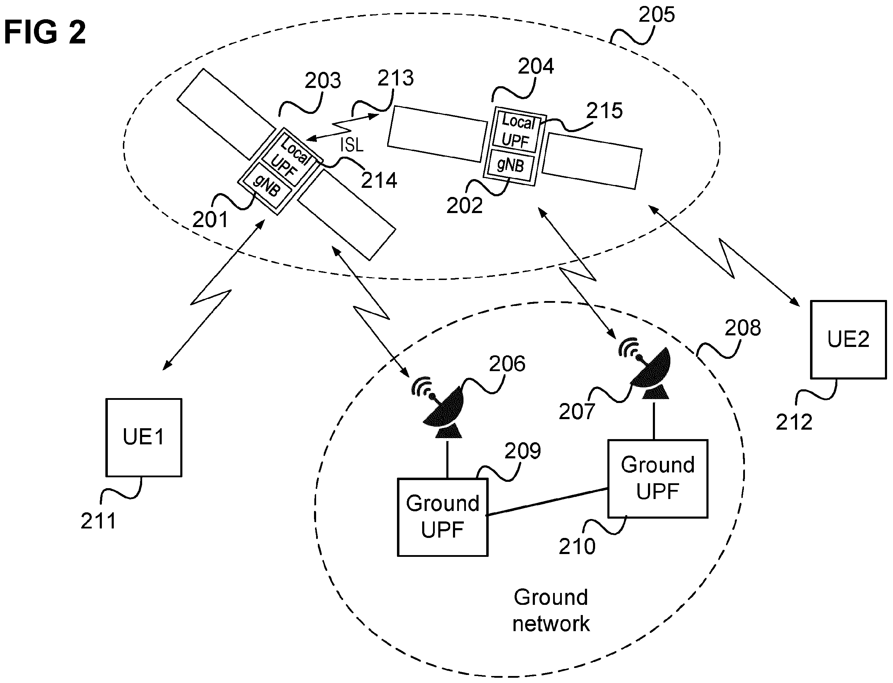

Base stations may be implemented by satellites. This means that communication between UEs under the coverage of one or more serving satellites can be supported, using regenerative-based satellite access (onboard gNBs). Such a scenario is illustrated in figure 2.

Figure 2 illustrates a scenario where the functionality of one or more base stations 201, 202 is provided by one or more satellites 203, 204.

In the example of figure 1, a first satellite 203 provides a first base station (e.g. gNB) 201 and a second satellite 204 provides a second base station 202. The two satellites 203, 204 form a satellite constellation 205 (which may have one or more satellites).

Each satellite 203, 204 is connected via a respective satellite antenna 206, 207 to a ground network 208 which includes a core network of the mobile communication network to the RAN of which the base stations 201, 202 belong.

The ground network 208 in particular includes a ground UPF 209, 210 for each satellite 206, 207 (which may also be the same ground UPF for each satellite 206, 207).

In the example of figure 2, the first base station 201 serves a first UE 211 and the second base station 202 serves a second UE 212, i.e. the first base station 201 operates a radio cell in which the first UE 211 is located and the second base station 202 operates a radio cell in which the second UE 212 is located. In other words, the first satellite 203 is the serving satellite for the first UE 211 and the second satellite 204 is the serving satellite for the second UE 212.

For communication between UEs 211, 212 served by satellite, i.e. communication (e.g. call) between two UEs 211, 212 via at least one satellite (i.e. at least one of them being served by a satellite as base station), a ground UPF 209, 210 is selected by the respective SMF 110, 112 and acts as a PDU session anchor (PSA).

When the first UE 211 and the second UE 212 are communicating, e.g. the first UE 211 sends data to the second UE 212, the data is transmitted from the first UE 211 to the first satellite 203, can then be sent to the ground network 208, from there to the second satellite 204 and from there to the second UE 212. This is referred to as satellite-based communication via the ground segment.

If, however, the two satellites 203, 204 can communicate via an inter-satellite link (ISL) 213 or if the same satellite serves both UEs 211, 212 delivery delay of data (i.e. user plane traffic) can be reduced by routing the data locally within the satellite constellation 205 (possibly within the same satellite if it is serving both UEs 211, 212). This is denoted as "local (onboard) routing (of traffic)" or "UE-SAT-UE communication", "local media routing" or "optimized routing of traffic" and may for example be of interest for delay-sensitive services. In other words, UE-Satellite(SAT)-UE communication refers to a communication between UEs under the coverage of one or more serving satellites, using satellite access without the user traffic transiting through the ground segment (i.e. avoiding the core network on the ground).

For the UE-SAT-UE communication, the SMF 110, 112 inserts an onboard (i.e. on-satellite) "local" UPF 214, 215 (acting as local PSA or "L-PSA") during call setup procedures.

However, it may be desirable that the operator of the mobile communication network has control over whether UEs 211, 212 use local routing of traffic. This is because local routing of traffic can be seen to be an optimized routing of traffic and the operator may want to offer this feature as a subscription-based service only for users having subscribed to this feature, i.e. having a subscription of the mobile communication network that includes that feature. For example, the feature would be provided to "Gold" and/or "Platinum" subscribers of the mobile communication network.

Users with such a subscription (i.e. having subscribed to the "local routing of traffic" feature) would then benefit from significantly reduced end-to-end delay (tens of milliseconds) while using this service as opposed to user traffic transiting through the ground network 208 (i.e. normal operation without local routing of traffic).

So, according to various embodiments, a mechanism is provided which allows an operator to have control over whether for a communication between two mobile terminals local routing of traffic is supported.

According to various embodiments, this is achieved by introducing a session management subscription data attribute "Satellite Subscription Indication" in the UDM 104. During PDU Session Establishment, the (respective) SMF 110, 112 queries the UDM 104 for the session management subscription information of the UE 102. If the Satellite Subscription Indication attribute is set in the UDM 104 for the UE's SUPI (Subscription Permanent Identifier) and, e.g., for the relevant S-NSSAI and DNN (if the attribute is dependent of these parameters) and the SMF 110, 112 receives the information that it is set, the SMF continues with the PDU session establishment procedure in a way to enable UE-SAT-UE communication (i.e. local routing of traffic).

If the attribute is not set (for any one of the involved UEs 211, 212), then the "optimized" local routing of traffic does not take place and the communication proceeds as per normal procedure (i.e. via ground segment). This means that the attribute needs to be set for both subscribers (i.e. both UEs 211, 212) in order to benefit from the local onboard routing. If either of the subscribers that is involved in the communication does not have the attribute parameter set, normal satellite-based communication, i.e. satellite-based communication via the ground segment, i.e. communication between two UEs via satellite without local onboard routing is performed (i.e. via the ground network 208 or, in other words, the ground segment).

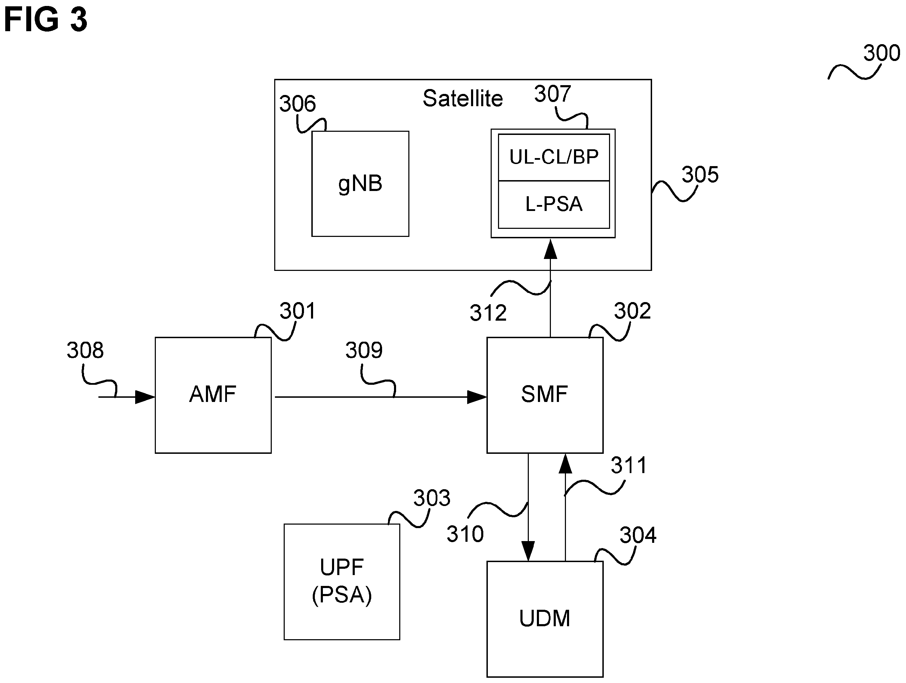

Figure 3 shows a flow diagram 300 illustrating a process for setting up a PDU session in a scenario as illustrated in figure 2.

In the following, the process is described for two embodiments
- First embodiment ( "minimalistic approach"): the introduced attribute "Satellite Subscription Indication" is of type Boolean in the DnnConfiguration (DNN: data network name). This can be seen as a satellite operator-agnostic approach
- Second embodiment ("exhaustive approach"): in this approach, the introduced attribute "Satellite Subscription Indication" is of type array in the DnnConfiguration. This contains a Satellite Constellation ID and optionally a list of Satellite IDs of the Satellite Constellation ID identifying one or more satellites for which onboard routing is allowed (for the respective subscriber). This approach can be seen as a satellite operator-approach.

Table 1 gives an example definition for the Satellite Subscription Indication attribute for the first embodiment.

**Table 1**

| Attribute name | Data type | P | Cardinality | Description |
|---|---|---|---|---|
| Satellite Subscription Indication | Boolean | O | 0..1 | Indicates whether local routing of traffic is allowed: |
| | | | | true: subscribed; false: not subscribed |

Table 2 gives an example definition for the Satellite Subscription Indication attribute for the second embodiment.

**Table 2**

| Attribute name | Data type | P | Cardinality | Description |
|---|---|---|---|---|
| Satellite Subscription Indication | array(SatelliteSubscript ionInfo) | O | 0..N | List of Satellite IDs belonging to the Satellite Constellation ID that allows local routing |

For both embodiments, an AMF 301, an SMF 302, a (ground) UPF 303, a UDM 304 and a satellite 305 are involved, wherein the satellite 305 implements a gNB 306.

In the first embodiment, the process is as follows:
In 308, the AMF 301 receives an NGAP (Next Generation Application Protocol) request with an NAS (non-access stratum) request for UE Requested PDU Session Establishment for a UE. The AMF 301 knows the UE's serving satellite's ID and its satellite constellation ID based on the UE's associated RAN node ID.

In 309, the AMF 301 sends an Nsmf_PDUSession_CreateSMContext request to the SMF 302. The AMF 301 provides the Satellite ID and Constellation ID to the SMF 302.

In 310, the SMF 302 requests subscribers Session Management (SM) Subscription Data using a GET request with key (e.g. SUPI, DNN and/or S-NSSAI) from the UDM 304.

In 311, on success (of retrieval of the subscription data), the UDM 304 responds with a HTTP 200 OK response with the SM subscription data (including the attribute "Satellite Subscription Indication") in the body of the response (see e.g. table 1). On failure (subscription data cannot be found for the given key), the UDM responds with 400 Not Found (and PDU session establishment fails, for example).

In 312, if the Satellite Subscription Indication attribute is set (i.e. local routing is allowed for the UE), the SMF 302 inserts a local UPF 307 (acting as L-PSA and e.g. as UL-CL (Uplink Classifier) and/or BP (multi-homing branching point)) for the given PDU Session in the satellite 305.

If both PDU Sessions that are involved (i.e. the PDU sessions for both UEs 211, 212) have the local UPF inserted (which may also be the same for both UEs 211, 212), UE-SAT-UE communication (with local onboard routing of (user-plane) traffic) is performed.

If the attribute is not set, the SMF 302 does not insert a local UPF 307 for the PDU Session. In that the case, the respective ground-based UPF 303 acts UPF (in particular as PSA) for the PDU Session. If either of the PDU Sessions that are involved does not have a local UPF inserted onboard a satellite, normal satellite-based communication (i.e. satellite-based communication via the ground segment, i.e. communication without local onboard routing satellite) is performed.

In the second embodiment, the process is as follows:
In 308, the AMF 301 receives an NGAP (Next Generation Application Protocol) request with an NAS (non-access stratum) request for UE Requested PDU Session Establishment for a UE. The AMF 301 knows the UE's serving satellite's ID and its satellite constellation ID based on the UE's associated RAN node ID.

In 309, the AMF 301 sends an Nsmf_PDUSession_CreateSMContext request to the SMF 302. The AMF 301 provides the Satellite ID and Constellation ID to the SMF 302.

In 310, the SMF 302 requests subscribers Session Management (SM) Subscription Data using a GET request with key (e.g. SUPI, DNN and/or S-NSSAI) from the UDM 304. Optionally, the SMF 302 can also use the Satellite Constellation ID as an additional key.

In 311, on success (of retrieval of the subscription data), the UDM 304 responds with a HTTP 200 OK response with the SM subscription data (including the attribute "Satellite Subscription Indication") in the body of the response which includes an array of Satellite IDs of the Satellite Constellation for which local routing is allowed (see e.g. table 2). On failure (subscription data cannot be found for the given key), the UDM responds with 400 Not Found (and PDU session establishment fails, for example).

In 312, if the Satellite Constellation ID and the Satellite ID of the UE's serving satellite are present in the list, (i.e. local routing is allowed for the UE, considering its serving satellite), the SMF 302 inserts a local UPF 307 (acting as L-PSA and e.g. as UL-CL (Uplink Classifier) and/or BP (multi-homing branching point)) for the given PDU Session in the satellite 305.

If both PDU Sessions that are involved (i.e. the PDU sessions for both UEs 211, 212) have the local UPF inserted (which may also be the same for both UEs 211, 212), UE-SAT-UE communication (i.e. with local onboard routing of (user-plane) is performed).

If the Satellite Constellation ID or the Satellite ID are not present in the list, the SMF 302 does not insert a local UPF 307 for the PDU Session. In that the case, the respective ground-based UPF 303 acts UPF (in particular as PSA) for the PDU Session. If either of the PDU Sessions that are involved does not have a local UPF inserted onboard a satellite, normal satellite-based communication (i.e. satellite-based communication via the ground segment, i.e. communication without local onboard routing satellite) is performed.

It should be noted that the actual trigger for the local UPF 307 insertion by the SMF 302 may vary. For example:
1) the SMF 301 inserts the local UPF 307 based on a list of DNAIs in PCC (Policy and Charging control) rules; in this case the SMF 302 may select a target DNAI based on the UE's gNB ID and select the location of the local UPF 307 based on the target DNAI.
2) the SMF 301 inserts the L-UPF based on the target Satellite ID in the PCC rules; in this case the SMF may select the location of the L-UPF based on the target Satellite ID

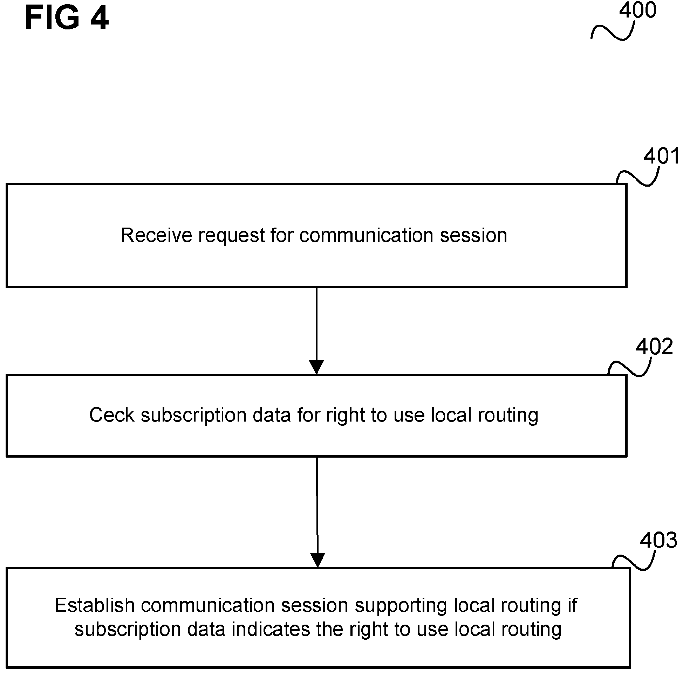

In summary, according to various embodiments, a method is provided as illustrated in figure 4.

Figure 4 shows a flow diagram 400 illustrating a method for providing communication between two mobile terminals according to an embodiment.

In 401, a request to establish, via at least one satellite, a communication session for a mobile terminal is received (i.e. the communication session should be established via the at least one satellite; the request may also be received (from the mobile terminal) via the at least one satellite).

In 402, subscription data of the mobile terminal (i.e. data including information about a subscription that the mobile terminal uses to access the mobile communication network which receives the request) is checked for information about whether the mobile terminal has a type of subscription which includes a right to use a feature which includes a (direct) routing in the at least one satellite, avoiding a core network on the ground, of traffic between the mobile terminal and other mobile terminals (i.e. without sending data received from one mobile terminal to the ground (earth) and receiving it back (by the same or another satellite) and only then forwarding it the other mobile terminal). In other words, the feature is UE-SAT-UE communication as described above (with local routing).

In 403, in reaction to that the mobile terminal has a type of subscription which includes the right to use the feature, a communication session is established for the mobile terminal which supports routing in the at least one satellite, avoiding a core network on the ground, of traffic between the mobile terminal and other mobile terminals (i.e. which uses the feature).

According to various embodiments, in other words, a mobile terminal's subscription data includes the information whether the mobile terminal may use local routing and a session managing component (e.g. an SMF) controls the establishment of a session (e.g. PDU session) accordingly.

The approach of figure 4 provides the capability to activate (or not) the feature of UE-SAT-UE communication (i.e. communication with local routing) for a certain user and, according to one embodiment, for a certain satellite or satellite-constellation.

According to one embodiment, the method includes sending, by the a session management control node to a data repository node, a control plane request message, the control plane request message comprising a SUPI, an S-NSSAI, a DNN and a Satellite Constellation ID, receiving, by the session management control node from the data repository node, a control plane response message, the control plane response message comprising an indication of satellite subscription information (and the optionally the satellite constellation ID) and an array of satellite IDs belonging to the satellite constellation ID, determining, by the session management control node, to use the procedures to support local routing based on the control plane response message received from the data repository node.

The session management control node and the data repository node are for example part of a 5GC or 6GC (i.e. a 5G core network or 6C core network). In 5G, these are a an SMF and a UDM, respectively.

The method of figure 4 may be carried out by a communication system component which may for example be implemented by one or more circuits. A "circuit" may be understood as any kind of a logic implementing entity, which may be special purpose circuitry or a processor executing software stored in a memory, firmware, or any combination thereof. Thus a "circuit" may be a hard-wired logic circuit or a programmable logic circuit such as a programmable processor, e.g. a microprocessor. A "circuit" may also be a processor executing software, e.g. any kind of computer program. Any other kind of implementation of the respective functions described above may also be understood as a "circuit".

While specific aspects have been described, it should be understood by those skilled in the art that various changes in form and detail may be made therein without departing from the scope of the aspects of this disclosure as defined by the appended claims. The scope is thus indicated by the appended claims.

## Claims

1. A method (400) for providing communication between two mobile terminals, comprising:
receiving (401) a request to establish, via at least one satellite (203, 204, 305), a communication session for a mobile terminal (102, 211), wherein the mobile terminal is served by a serving satellite of the at least one satellite;
checking (402) subscription data of the mobile terminal for information about whether the mobile terminal has a type of subscription which includes a right to use a feature which includes a routing in the at least one satellite, avoiding a core network (119) on the ground (208), of traffic between the mobile terminal and other mobile terminals,
and whether the mobile terminal has a type of subscription which includes a right to use the feature per satellite of multiple satellites or per satellite constellation (205) of multiple satellite constellations,
wherein the subscription data of the mobile terminal comprises an attribute indicating satellite subscription information, and
wherein said satellite subscription information comprises a satellite constellation ID and a list of satellite IDs of the satellite constellation ID identifying one or more satellites for which onboard routing is allowed; and
in reaction to that the mobile terminal has a type of subscription which includes the right to use the feature, establishing (403) a communication session for the mobile terminal which supports routing in the at least one satellite, avoiding a core network on the ground, of traffic between the mobile terminal and other mobile terminals.

2. The method (400) of claim 1, wherein establishing the communication session includes allocating a user plane function (214, 307) onboard the serving satellite of the at least one satellite (203, 204, 305) for the mobile terminal (102, 211).

3. The method (400) of claim 1 or 2, comprising routing data between the mobile terminal (102, 211) and another mobile terminal (212) while avoiding the core network (119) on the ground (208) in reaction to the mobile terminal having a type of subscription which includes the right to use the feature and a communication session for the other mobile terminal being established which supports routing in the at least one satellite (203, 204, 305), avoiding a core network on the ground, of traffic between the other mobile terminal and the mobile terminal.

4. The method (400) of claim 3, comprising receiving a request to establish a communication session for the other the mobile terminal (212) via the at least one satellite (203, 204, 305) and a request to establish a communication between the mobile terminal (102, 211) and the other mobile terminal;
checking subscription data of the other mobile terminal for information about whether the other mobile terminal has a type of subscription which includes a right to use the feature; and
in reaction to that the mobile terminal has a type of subscription which includes the right to use the feature, and the other mobile terminal has a type of subscription which includes the right to use the feature, perform communication between the mobile terminal and the other mobile terminal,
wherein data between the mobile terminal and the other mobile terminal is routed avoiding the core network (119) on the ground (208).

5. The method (400) of claim 4, wherein the at least one satellite (203, 204, 305) includes a serving satellite of the mobile terminal (102, 211) and a serving satellite of the other mobile terminal (212) and comprising, in reaction to that the mobile terminal has a type of subscription which includes the right to use the feature, and the other mobile terminal has a type of subscription which includes the right to use the feature,
• allocating a user plane function (214, 307) in the serving satellite of the mobile terminal for the mobile terminal and allocating a user plane function (215, 307) in the serving satellite of the other mobile terminal for the other mobile terminal and
• routing traffic over the user plane function allocated for the mobile terminal and the user plane function allocated for the other mobile terminal between the mobile terminal and the other mobile terminal.

6. The method (400) of claim 5, wherein the serving satellite of the mobile terminal (102, 211) and a serving satellite of the other mobile terminal (212) are different satellites connected via an inter-satellite link (213) and routing traffic between the mobile terminal and the other mobile terminal comprises routing the traffic via the inter-satellite link.

7. The method (400) of any one of claims 1 to 6, wherein each satellite of the at least one satellite (203, 204, 305) implements at least one base station (201, 202, 306) of a mobile communication network, and the core network (119) is a core network of the mobile communication network.

8. The method (400) of any one of claims 1 to 7, performed by a session management component (302) of the core network (119).

9. The method (400) of any one of claims 1 to 8, wherein checking the subscription data of the mobile terminal (102, 211) comprises accessing a subscription data repository (121) of the core network (119) for the subscription data.

10. The method (400) of any one of claims 1 to 9, wherein the request to establish the communication session for the mobile terminal (102, 211) originates from the mobile terminal.

11. The method (400) of any one of claims 1 to 10, wherein the communication session is a Packet Data Unit session.

12. A session management control component (302) of a mobile communication network, configured to perform the method of any one of claims 1 to 11.

## Patentansprüche

1. Ein Verfahren (400) zum Bereitstellen einer Kommunikation zwischen zwei mobilen Endgeräten, aufweisend:
Empfangen (401) einer Anforderung zum Herstellen einer Kommunikationssitzung für ein mobiles Endgerät (102, 211) über mindestens einen Satelliten (203, 204, 305), wobei das mobile Endgerät von einem versorgenden Satelliten des mindestens einen Satelliten versorgt wird;
Prüfen (402) von Subskriptionsdaten des mobilen Endgeräts hinsichtlich Informationen darüber, ob das mobile Endgerät eine Art von Subskription aufweist, die ein Recht zur Nutzung eines Leistungsmerkmals enthält, welches Routing von Verkehr zwischen dem mobilen Endgerät und anderen mobilen Endgeräten in dem mindestens einen Satelliten unter Umgehung eines Kernnetzes (119) am Boden (208) enthält, und ob das mobile Endgerät eine Art von Subskription aufweist, die ein Recht zur Nutzung des Leistungsmerkmals pro Satellit mehrerer Satelliten oder pro Satellitenkonstellation (205) mehrerer Satellitenkonstellationen enthält,
wobei die Subskriptionsdaten des mobilen Endgeräts ein Attribut aufweisen, das Satelliten-Subskriptionsinformationen angibt, und
wobei die Satelliten-Subskriptionsinformationen eine Satellitenkonstellations-ID und eine Liste von Satelliten-IDs der Satellitenkonstellations-ID aufweisen, die einen oder mehrere Satelliten identifizieren, für die An-Bord-Routing zulässig ist; und
in Reaktion darauf, dass das mobile Endgerät eine Art von Subskription aufweist, die das Recht zur Nutzung des Leistungsmerkmals enthält, Herstellen (403) einer Kommunikationssitzung für das mobile Endgerät, die Routing in dem mindestens einen Satelliten unter Umgehung eines Kernnetzes am Boden von Verkehr zwischen dem mobilen Endgerät und anderen mobilen Endgeräten unterstützt.

2. Das Verfahren (400) nach Anspruch 1, wobei das Herstellen der Kommunikationssitzung das Allokieren einer User-Plane-Funktion (214, 307) an Bord des versorgenden Satelliten des mindestens einen Satelliten (203, 204, 305) für das mobile Endgerät (102, 211) enthält.

3. Das Verfahren (400) nach Anspruch 1 oder 2, aufweisend das Routen von Daten zwischen dem mobilen Endgerät (102, 211) und einem anderen mobilen Endgerät (212) unter Umgehung des Kernnetzes (119) am Boden (208), in Reaktion darauf, dass das mobile Endgerät eine Art von Subskription aufweist, die das Recht zur Nutzung des Leistungsmerkmals enthält, und das Herstellen einer Kommunikationssitzung für das andere mobile Endgerät, die Routing in dem mindestens einen Satelliten (203, 204, 305) unter Umgehung eines Kernnetzes am Boden von Verkehr zwischen dem anderen mobilen Endgerät und dem Endgerät unterstützt.

4. Das Verfahren (400) nach Anspruch 3, aufweisend Empfangen einer Anforderung zum Herstellen einer Kommunikationssitzung für das andere mobile Endgerät (212) über den mindestens einen Satelliten (203, 204, 305) und einer Anforderung zum Herstellen einer Kommunikation zwischen dem mobilen Endgerät (102, 211) und dem anderen mobilen Endgerät;
Prüfen von Subskriptionsdaten des anderen mobilen Endgeräts hinsichtlich Informationen darüber, ob das andere mobile Endgerät eine Art von Subskription aufweist, die ein Recht zur Nutzung des Leistungsmerkmals enthält; und
in Reaktion darauf, dass das mobile Endgerät eine Art von Subskription aufweist, die das Recht zur Nutzung des Leistungsmerkmals enthält und das andere mobile Endgerät eine Art von Subskription aufweist, die das Recht zur Nutzung des Leistungsmerkmals enthält, Durchführen einer Kommunikation zwischen dem mobilen Endgerät und dem anderen mobilen Endgerät, wobei Daten zwischen dem mobilen Endgerät und dem anderen mobilen Endgerät unter Umgehung des Kernnetzes (119) am Boden (208) geroutet werden.

5. Das Verfahren (400) nach Anspruch 4, wobei der mindestens eine Satellit (203, 204, 305) einen versorgenden Satelliten des mobilen Endgeräts (102, 211) und einen versorgenden Satelliten des anderen mobilen Endgeräts (212) enthält, und aufweisend, in Reaktion darauf, dass das mobile Endgerät eine Art von Subskription aufweist, die das Recht zur Nutzung des Leistungsmerkmals enthält und das andere mobile Endgerät eine Art von Subskription aufweist, die das Recht zur Nutzung des Leistungsmerkmals enthält,
• Allokieren einer User-Plane-Funktion (214, 307) im versorgenden Satelliten des mobilen Endgeräts für das mobile Endgerät und Allokieren einer User-Plane-Funktion (215, 307) im versorgenden Satelliten des anderen mobilen Endgeräts für das andere mobile Endgerät;
• Routen von Verkehr über die allokierten User-Plane-Funktionen zwischen den mobilen Endgeräten.

6. Das Verfahren (400) nach Anspruch 5, wobei der versorgende Satellit des mobilen Endgeräts (102, 211) und der versorgende Satellit des anderen mobilen Endgeräts (212) unterschiedliche Satelliten sind, die über eine Satelliten-zu-Satelliten-Verbindung (213) verbunden sind, und wobei das Routing des Verkehrs über die Satelliten-zu-Satelliten-Verbindung erfolgt.

7. Das Verfahren (400) nach einem der Ansprüche 1 bis 6, wobei jeder Satellit des mindestens einen Satelliten (203, 204, 305) mindestens eine Basisstationsfunktion (201, 202, 306) eines Mobilfunknetzes implementiert und das Kernnetz (119) ein Kernnetz des Mobilfunknetzes ist.

8. Das Verfahren (400) nach einem der Ansprüche 1 bis 7, durchgeführt von einer Sitzungsverwaltungs-Steuerkomponente (302) des Kernnetzes (119).

9. Das Verfahren (400) nach einem der Ansprüche 1 bis 8, wobei das Prüfen der Subskriptionsdaten des mobilen Endgeräts (102, 211) den Zugriff auf einen Subskriptionsdaten-Speicher (121) des Kernnetzes (119) für die Subskriptionsdaten enthält.

10. Das Verfahren (400) nach einem der Ansprüche 1 bis 9, wobei die Anforderung zum Herstellen der Kommunikationssitzung für das mobile Endgerät (102, 211) von dem mobilen Endgerät ausgeht.

11. Das Verfahren (400) nach einem der Ansprüche 1 bis 10, wobei die Kommunikationssitzung eine Packet Data Unit-Sitzung ist.

12. Eine Sitzungsverwaltungs-Steuerkomponente (302) eines Mobilfunknetzes, eingerichtet zur Durchführung des Verfahrens nach einem der Ansprüche 1 bis 11.

## Revendications

1. Procédé (400) pour fournir une communication entre deux terminaux mobiles, comprenant :
la réception (401) d'une demande pour établir, via au moins un satellite (203, 204, 305), une session de communication pour un terminal mobile (102, 211), le terminal mobile étant desservi par un satellite de desserte parmi ledit au moins un satellite ;
la vérification (402) de données d'abonnement du terminal mobile concernant des informations pour savoir si le terminal mobile dispose d'un type d'abonnement incluant un droit d'utiliser une caractéristique qui comporte un routage au sein dudit au moins un satellite, en évitant un réseau central (119) au sol (208), de trafic entre le terminal mobile et d'autres terminaux mobiles, et si le terminal mobile dispose d'un type d'abonnement comprenant un droit d'utiliser la caractéristique par satellite parmi plusieurs satellites ou par constellation de satellites (205) parmi plusieurs constellations de satellites,
dans lequel les données d'abonnement du terminal mobile comprennent un attribut indiquant des informations d'abonnement de satellite, et
dans lequel lesdites informations d'abonnement de satellite comprennent un identifiant de constellation de satellites et une liste d'identifiants de satellites de l'identifiant de constellation de satellites, identifiant un ou plusieurs satellites pour lesquels le routage à bord est autorisé ; et
en réponse au fait que le terminal mobile dispose d'un type d'abonnement incluant le droit d'utiliser la caractéristique, l'établissement (403) d'une session de communication pour le terminal mobile qui supporte le routage dans ledit au moins un satellite, en évitant un réseau central au sol, de trafic entre le terminal mobile et d'autres terminaux mobiles.

2. Procédé (400) selon la revendication 1, dans lequel l'établissement de la session de communication comprend l'allocation d'une fonction de plan utilisateur (214, 307) à bord du satellite de desserte dudit au moins un satellite (203, 204, 305) pour le terminal mobile (102, 211).

3. Procédé (400) selon la revendication 1 ou 2, comprenant le routage de données entre le terminal mobile (102, 211) et un autre terminal mobile (212) tout en évitant le réseau central (119) au sol (208) en réponse au fait que le terminal mobile dispose d'un type d'abonnement incluant le droit d'utiliser la caractéristique et qu'une session de communication est établie pour l'autre terminal mobile, laquelle supporte le routage, au sein dudit au moins un satellite (203, 204, 305), en évitant un réseau central au sol, de trafic entre l'autre terminal mobile et le terminal mobile.

4. Procédé (400) selon la revendication 3, comprenant la réception d'une demande d'établissement d'une session de communication pour l'autre terminal mobile (212) via ledit au moins un satellite (203, 204, 305) et d'une demande d'établissement d'une communication entre le terminal mobile (102, 211) et l'autre terminal mobile ;
la vérification de données d'abonnement de l'autre terminal mobile concernant des informations pour savoir si l'autre terminal mobile dispose d'un type d'abonnement incluant un droit d'utiliser la caractéristique ; et
en réponse au fait que le terminal mobile dispose d'un type d'abonnement incluant le droit d'utiliser la caractéristique, et que l'autre terminal mobile dispose d'un type d'abonnement incluant le droit d'utiliser la caractéristique, l'établissement d'une communication entre le terminal mobile et l'autre terminal mobile,
dans lequel des données entre le terminal mobile et l'autre terminal mobile sont acheminées en évitant le réseau central (119) au sol (208).

5. Procédé (400) selon la revendication 4, dans lequel ledit au moins un satellite (203, 204, 305) comprend un satellite de desserte du terminal mobile (102, 211) et un satellite de desserte de l'autre terminal mobile (212), et comprenant, en réponse au fait que le terminal mobile dispose d'un type d'abonnement incluant le droit d'utiliser la caractéristique, et que l'autre terminal mobile dispose d'un type d'abonnement incluant le droit d'utiliser la caractéristique,
• l'allocation d'une fonction de plan utilisateur (214, 307) dans le satellite de desserte du terminal mobile pour le terminal mobile et l'allocation d'une fonction de plan utilisateur (215, 307) dans le satellite de desserte de l'autre terminal mobile pour l'autre terminal mobile, et
• le routage de trafic via la fonction de plan utilisateur allouée pour le terminal mobile et la fonction de plan utilisateur allouée pour l'autre terminal mobile entre le terminal mobile et l'autre terminal mobile.

6. Procédé (400) selon la revendication 5, dans lequel le satellite de desserte du terminal mobile (102, 211) et un satellite de desserte de l'autre terminal mobile (212) sont des satellites différents reliés par un lien inter-satellite (213) et le routage de trafic entre le terminal mobile et l'autre terminal mobile comprend le routage de trafic via le lien inter-satellite.

7. Procédé (400) selon l'une quelconque des revendications 1 à 6, dans lequel chaque satellite parmi ledit au moins un satellite (203, 204, 305) met en œuvre au moins une station de base (201, 202, 306) d'un réseau de communication mobile, et le réseau central (119) est un réseau central dudit réseau de communication mobile.

8. Procédé (400) selon l'une quelconque des revendications 1 à 7, mis en œuvre par un composant de gestion de session (302) du réseau central (119).

9. Procédé (400) selon l'une quelconque des revendications 1 à 8, dans lequel la vérification des données d'abonnement du terminal mobile (102, 211) comprend l'accès à un référentiel de données d'abonnement (121) du réseau central (119) pour lesdites données d'abonnement.

10. Procédé (400) selon l'une quelconque des revendications 1 à 9, dans lequel la demande d'établissement de la session de communication pour le terminal mobile (102, 211) provient du terminal mobile.

11. Procédé (400) selon l'une quelconque des revendications 1 à 10, dans lequel la session de communication est une session d'unités de données par paquets.

12. Composant de contrôle de gestion de session (302) d'un réseau de communication mobile, configuré pour mettre en œuvre le procédé selon l'une quelconque des revendications 1 à 11.
